# FASCICULE DE BREVET EUROPEEN

(11) **EP 2 862 259 B1**
(45) Date de publication et mention de la délivrance du brevet: **17.02.2021**
(21) Numéro de dépôt: 13732108.9
(22) Date de dépôt: 13.06.2013
(51) Int. Cl.: H02K 5/04, H02K 11/33, E06B 9/72, H02K 5/22, E06B 9/50

(54) **DISPOSITIF MOTORISE DE MANOEUVRE DESTINE A LA MANOEUVRE D'UN ECRAN MOBILE A TOILE ENROULABLE D'UN DISPOSITIF DE COUVERTURE DE FENETRE OU D'ECRAN DE PROJECTION**
MOTORANTRIEB FÜR DIE BEDIENUNG EINES SCHUTZSCHIRMS WIE EINE FENSTERABDECKUNG ODER EINER PROJEKTIONSLEINWAND
MOTORIZED OPERATING DEVICE FOR OPERATING A MOVEABLE SCREEN HAVING A ROLL-UP CANVAS OF A WINDOW COVERING OR PROJECTION SCREEN DEVICE

(30) Priorité: 13.06.2012 FR 1255524
(43) Date de publication de la demande: 22.04.2015
(60) Demande divisionnaire: 15174484.4
(73) Titulaire: SOMFY ACTIVITES SA, 74300 Cluses (FR)
(72) Inventeur: LEMAITRE, Sébastien, F-74300 Cluses (FR); PEILLEX, Julien, F-74300 Cluses (FR)
(74) Mandataire: Novaimo
(86) Numéro de dépôt international: PCT/EP2013/062300
(87) Numéro de publication internationale: WO 2013/186321

(56) Documents cités:
- EP-A2- 0 911 479
- WO-A1-2011/150412
- DE-A1- 4 038 419
- DE-U1- 29 818 023

## Description

L'invention concerne une installation d'écran mobile à toile enroulable, de type couverture de fenêtre ou écran de projection, muni d'un élément d'enroulement motorisé. L'invention porte plus précisément sur un dispositif motorisé de manœuvre destiné à la manœuvre d'un écran mobile à toile enroulable d'un dispositif de couverture de fenêtre ou d'écran de projection et sur un dispositif de couverture de fenêtre ou d'écran de projection comprenant un tel dispositif de manœuvre. L'invention concerne notamment un système domotique motorisé de manœuvre d'un écran mobile dans une configuration de montage classique pour lequel l'arbre d'enroulement doit être maintenu en position fixe par rapport à un bâti aussi bien qu'un système domotique motorisé de manœuvre d'un écran à montage inversé, dont l'arbre d'enroulement est suspendu à la toile et donc déplaçable par rapport à sa structure porteuse (bâtiment ou structure mobile telle qu'une barre de charge ou un bras d'un store de terrasse).

Un tel écran est décrit dans la demande de brevet non publiée PCT/EP11073888. (WO 2012/085252).

Dans cette demande, le dispositif motorisé de manœuvre est destiné à être suspendu par la toile et comprend :
- un tube d'enroulement mobile autour d'un premier axe et sur lequel la toile est destinée à s'enrouler,
- un actionneur disposé au moins partiellement dans le tube,
- un premier moyen de fixation d'une première extrémité de la toile au tube d'enroulement.

Le poids du dispositif de manœuvre crée un couple de déroulement de la toile. Le dispositif comprend un moyen de compensation du couple de déroulement agissant exclusivement par interaction avec la pesanteur et/ou avec la toile. Ce moyen de compensation comprend notamment une barre de reprise de couple montée entre deux flasques latéraux.

Dans les différents types d'écrans, l'actionneur est monté à l'intérieur du tube d'enroulement. L'arbre de sortie de l'actionneur entraîne en rotation le tube d'enroulement lorsque le moteur de l'actionneur est alimenté.

L'actionneur comprend un carter tubulaire creux, fermé par une pièce dite tête de l'actionneur. Celle-ci est traditionnellement fixée sur un accessoire rapporté lui-même sur un bâti, un flasque ou sur une joue d'un caisson. L'arbre d'enroulement est maintenu libre en rotation sur l'actionneur, notamment sur une portion de carter tubulaire de l'actionneur.

On connaît aussi des documents DE4038419A1, WO2011/150412A1, EP911479A2 et DE29818023U1 différents dispositifs d'entraînement de stores enroulables.

Le but de l'invention est de fournir un dispositif de manœuvre d'un écran mobile améliorant les dispositifs de manœuvre connus de l'art antérieur. En particulier, l'invention propose un dispositif de manœuvre d'architecture simple et compact, dans lequel intervient un élément de support simple, fiable, et polyvalent. Le but de l'invention est également de fournir un dispositif de manœuvre d'un écran mobile dans lequel l'actionneur s'intègre sans accessoire, le dispositif lui-même agissant comme tête d'actionneur. Par ailleurs, un autre but de l'invention est de fournir un élément de support pouvant convenir à différentes architectures de système domotique à tube ou arbre d'enroulement.

Selon l'invention, un dispositif motorisé de manœuvre est défini par la revendication 1.

Différents modes de réalisation du dispositif sont définis par les revendications 2 à 12.

Selon l'invention, un système domotique motorisé est défini par la revendication 13.

L'invention sera mieux comprise à la lecture de la description qui va suivre, donnée uniquement à titre d'exemple et faite en se référant aux dessins annexés sur lesquels :
La figure 1 est une représentation d'un premier mode de réalisation d'un système domotique motorisé de manœuvre d'un écran mobile dans une configuration de montage classique.
La figure 2 est une représentation d'un deuxième mode de réalisation d'un système domotique motorisé de manœuvre d'un écran mobile dans une configuration de montage inversée.
La figure 3 représente, en vue éclatée, une partie d'un dispositif motorisé de manœuvre d'un écran mobile.
La figure 4 représente, en perspective, une vue de la face externe d'un flasque.

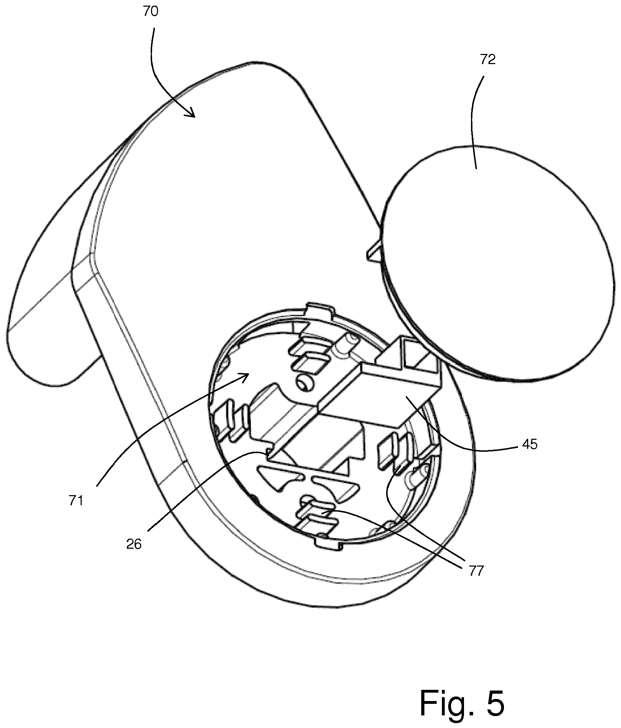

La figure 5 représente en perspective une vue de la face interne du flasque.

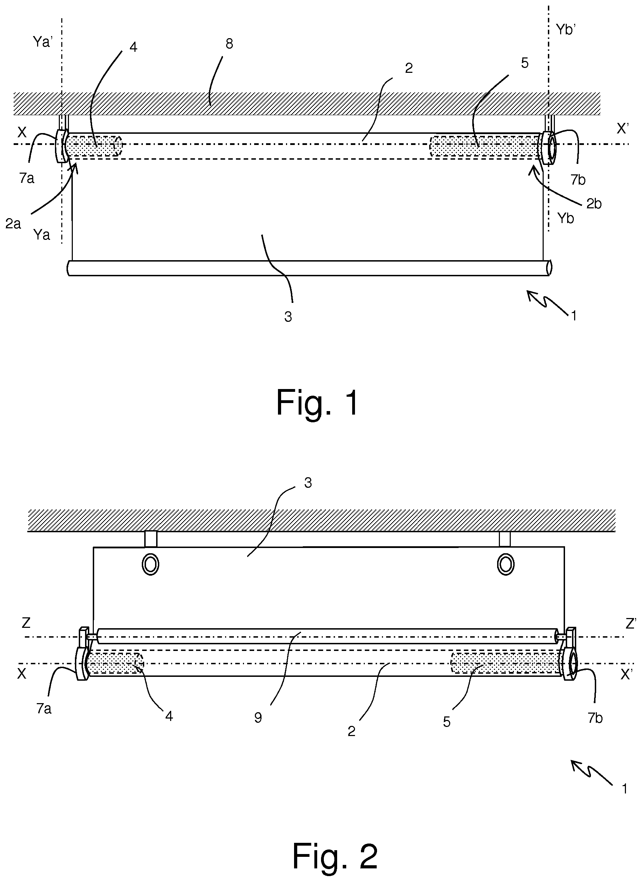

Un mode de réalisation d'un système domotique motorisé de manœuvre 1, représenté à la figure 1, permet la manœuvre motorisée d'un écran mobile 3, notamment un écran enroulable autour d'un tube d'enroulement 2, tel qu'un store. Il est notamment prévu pour être utilisé pour occulter ou restreindre la pénétration de soleil par une ouverture d'un bâtiment.

Le système domotique ou système d'écran motorisé comprend un actionneur 4 de manœuvre du tube d'enroulement. Cet actionneur est de préférence disposé partiellement ou totalement dans le tube d'enroulement. L'actionneur de manœuvre est dit autonome, c'est-à-dire qu'il est alimenté par un dispositif d'alimentation 5 propre comprenant un élément de stockage d'énergie électrique 6. L'actionneur de manœuvre est inséré dans le tube d'enroulement, à une de ses extrémités, tandis que le dispositif d'alimentation est inséré dans le tube d'enroulement, à son autre extrémité.

L'actionneur met en mouvement le tube d'enroulement de manière connue. L'écran mobile est accroché par une de ses extrémités au tube. Ainsi, la rotation du tube d'enroulement entraîne, selon son sens, l'enroulement ou le déroulement de l'écran sur le tube. L'actionneur et le tube d'enroulement s'étendent suivant un premier axe X-X'.

Le système 1 comprend deux flasques 7a, 7b de part et d'autre du tube d'enroulement. Ces flasques servent au maintien du système d'écran motorisé sur une structure ou bâti fixe 8, par exemple un plafond ou un mur. En particulier, les flasques 7a et 7b supportent le tube d'enroulement suivant deux axes Ya-Ya' et Yb-Yb', parallèles entre eux et perpendiculaires au premier axe X-X'. D'autres configurations sont également possibles. Dans ce premier mode de réalisation, le tube d'enroulement demeure fixe (hors de sa rotation autour de son axe X-X') relativement à la structure du bâtiment et la toile s'enroule autour de ce tube d'enroulement. On appelle premier flasque ou flasque moteur, le flasque 7a proche de l'actionneur et deuxième flasque, le flasque 7b à l'extrémité opposée du tube.

Dans un deuxième mode de réalisation représenté en figure 2, le système d'écran motorisé est destiné à être lié à la structure du bâtiment exclusivement par l'écran, c'est-à-dire que le système d'écran motorisé est un système suspendu par l'écran et dont le tube d'enroulement se translate, notamment se translate verticalement, au fil de l'enroulement ou du déroulement de l'écran. Ainsi, toutes les reprises d'efforts exercées sur le système sont assurées par l'écran. De préférence, aucun autre contact ou liaison entre le système et le bâtiment n'existe. Les flasques 7a et 7b servent alors à maintenir le tube d'enroulement relativement à l'écran, notamment grâce à une barre 9 de reprise de couple de rotation en contact avec l'écran et maintenue entre les flasques suivant une direction Z-Z', parallèle à l'axe X-X'. Les autres références restent inchangées.

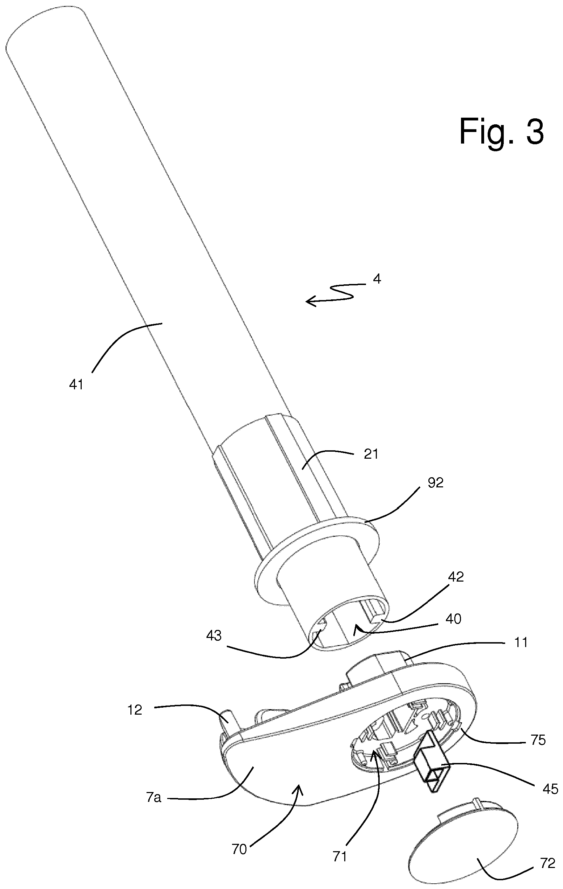

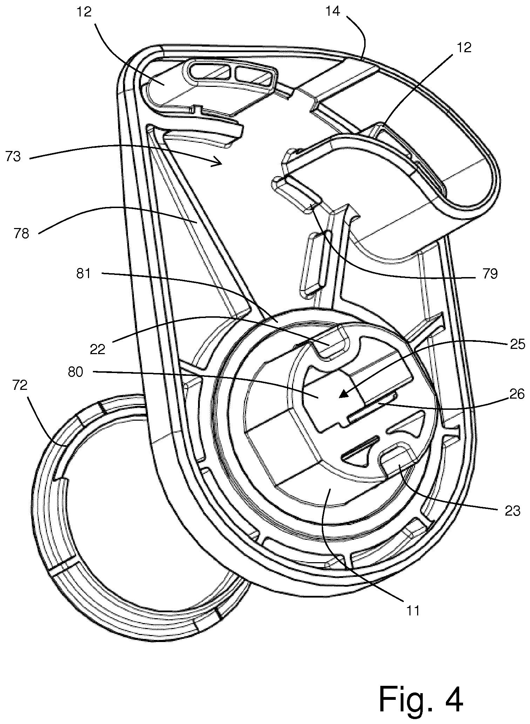

Comme représenté en figures 3 et 4, l'actionneur comprend un carter creux 41, à l'intérieur duquel sont logés les composants électromécaniques (non représentés) tels que le moteur, le réducteur, le récepteur radio, l'électronique de pilotage, etc.

La paroi interne du carter 40 présente une ou plusieurs nervures 42, 43, ainsi que des zones planes 44. Les zones planes peuvent comporter une rainure (non représentée), permettant de guider en translation au moins une partie des composants électromécanique, par exemple un circuit imprimé supportant l'électronique de pilotage.

Il est à noter que le carter tubulaire peut comprendre un opercule de fermeture (non représenté), inséré dans le carter pour protéger les composants électromécaniques de l'actionneur, et au travers duquel passent des fils d'alimentation. Cependant, même dans ce cas, l'extrémité du carter est creuse.

Une couronne 21 à collerette 92 est montée libre en rotation sur le carter. Elle sert de palier pour le tube d'enroulement lorsque l'actionneur est inséré dans le tube.

Le carter de l'actionneur est fermé par le premier flasque 7a, dont un premier support 11 coopère avec l'extrémité creuse du carter de l'actionneur. En particulier, le premier support du flasque moteur prend la forme d'un arbre de support s'étendant sensiblement perpendiculairement au flasque sur une face interne 71. L'arbre de support est muni d'au moins une gorge ou rainure longitudinale 22, 23. Les gorges coopèrent avec les nervures 42, 43 formées sur les parois internes du carter de l'actionneur. L'assemblage rainures-nervures permet à la fois de guider l'assemblage du carter sur l'arbre de support et également d'assurer la reprise des efforts en rotation liés au moteur (reprise de couple). L'arbre de support comprend également un ou plusieurs méplats 24, correspondant aux zones planes sur la surface interne du carter creux, pour ce même objectif. L'actionneur est ainsi monté sur l'arbre support par glissement, avant d'être éventuellement bloqué en translation sur l'arbre ou sur le flasque moteur. Ainsi, le premier support peut comprendre au moins un premier élément d'arrêt en rotation, notamment au moins une rainure 22, 23, respectivement au moins une nervure, en particulier au moins un premier élément d'arrêt en rotation formé sur une partie arbrée du premier support 1. Par ailleurs, en le carter 41 peut comprendre au moins un deuxième élément 42 , 43 d'arrêt en rotation, notamment au moins une nervure 42, 43, respectivement au moins une rainure, en particulier au moins un deuxième élément d'arrêt en rotation formé sur des parois internes du carter. Les premier et deuxième éléments d'arrêt en rotation coopèrent avantageusement pour lier en rotation, notamment pour lier en rotation autour du premier axe longitudinal XX', le premier support et le carter.

Le flasque moteur et le carter tubulaire de l'actionneur sont donc en liaison directe, sans autre intermédiaire. En particulier, l'actionneur ne comprend pas de tête, obturant le carter et servant de point de maintien. Autrement dit, la tête de l'actionneur est constituée par le flasque qui comprend également une deuxième fonction de support, notamment une fonction de support d'un élément de compensation de couple ou une fonction de support du système domotique.

Le montage gagne ainsi en épaisseur : le flasque moteur reprend lui-même le couple de rotation fourni par l'actionneur, en étant directement connecté au carter creux 41 ou corps creux de l'actionneur. Ainsi, le tube d'enroulement et par conséquent le rebord de la toile peut être au plus proche de la face interne du flasque.

L'arbre de support est muni d'un premier alésage 25 comprenant sur ses parois internes au moins un rails 26 formant un élément de support et de guidage pour une carte électronique 45 de commande de l'actionneur. Celle-ci se retrouve ainsi au moins partiellement à l'intérieur du carter de l'actionneur lorsque celui-ci est assemblé sur l'arbre de support et lorsque la carte électronique est glissée le long des rails à l'intérieur de l'alésage de l'arbre de support.

Avantageusement, l'alésage dans l'arbre de support est traversant et le flasque moteur 7a comprend également un alésage 71 traversant, formant une ouverture sur la partie externe 70 du flasque, refermable par un couvercle 72. Cette ouverture permet d'accéder notamment à la carte électronique sans démonter le reste du système. En particulier, le flasque comprend des encoches 75, permettant notamment le passage d'un outil, comme un tournevis plat, pour agir, notamment par une action de levier, pour soulever le couvercle et accéder à la carte électronique.

La carte électronique peut également être munie d'éléments d'interface, par exemple d'un bouton de programmation, qui est ainsi accessible dès lors que le couvercle du flasque est enlevé, sans démonter le reste du système. En cas de maintenance, il est très simple de démonter le système et de désassembler les différentes parties.

Le flasque comprend également un deuxième élément de support 12. Celui-ci permet sa fixation à un mur ou un plafond, dans le premier mode de réalisation, ou à la barre 9 de reprise de couple de rotation, dans le deuxième mode de réalisation. Dans ces deux modes de réalisation, le deuxième élément de support est distinct du premier élément de support et agit suivant un axe distinct.

Dans le premier mode de réalisation, le deuxième élément de support comprend un pied qui peut être monté sur un mur ou sur un plafond, au moyen d'éléments connus tels que des vis, de la colle, des aimants. Le support (ou la suspension) du dispositif au bâti est ainsi réalisé suivant une direction Ya-Ya' perpendiculaire à l'axe du tube d'enroulement X-X'.

Sur l'exemple représenté en figure 3, le deuxième élément de support prend la forme d'un pion s'étendant suivant un axe Z-Z' parallèle à l'axe du premier support. Plusieurs pions peuvent constituer l'élément de support. La barre de reprise de couple est ainsi maintenue entre le deuxième élément de support du flasque moteur et le deuxième flasque.

L'élément de compensation de couple peut avoir une extrémité creuse dont le diamètre interne correspond à celui du pion pour y être enfiché et maintenu mécaniquement.

A la place de l'élément de reprise de couple, un élément de connexion (non représenté) peut être monté sur le deuxième élément de support sous forme de pion. Cet élément de connexion permet de monter le dispositif sur un mur ou un plafond, tout en utilisant un flasque identique ou quasi-identique pour les deux modes de réalisation. L'élément de connexion est par exemple un élément coudé.

Chaque élément latéral 7, 7' réalisé sous forme de flasque comprend outre les éléments de support mentionnés, des éléments 14 pour masquer et protéger les parties latérales de l'enroulement, et éventuellement pour guider celles-ci dans le cas où un obstacle viendrait à modifier la bonne marche de l'enroulement.

Le flasque moteur comprend en outre dans l'alésage débouchant sur sa face externe, un premier chemin de guidage 77 pour y ranger, par exemple un fil d'antenne. Ce premier chemin de guidage peut prendre la forme de pions disposés en vis-à-vis et entre lesquels peut se loger par coincement une partie du câble d'antenne.

La face interne du flasque moteur est évidée et comprend, outre des parois de renforcement 78, également un deuxième chemin de guidage 79 entre le premier élément de support et le deuxième élément de support. La face interne et la face externe communiquent, au travers d'un trou de passage 80 débouchant de la face interne dans l'alésage de la face interne. Le trou de passage débouche à l'extérieur du diamètre du carter de l'actionneur. Ce deuxième chemin de guidage permet de loger un fil d'alimentation (non représenté), par exemple arrivant le long de la barre de reprise de couple depuis le dispositif d'alimentation disposé à l'autre extrémité du tube d'enroulement, vers l'actionneur, ou arrivant depuis un faux plafond le long du deuxième support. Le fil d'alimentation est alors inséré par le trou de passage vers l'alésage du flasque moteur et peut être raccordé à la carte électronique ou à l'actionneur au travers de l'alésage de l'arbre de support.

La face interne du flasque comprend également une surface annulaire 81 sur laquelle, lors du montage, vient s'appuyer la collerette de la couronne servant de palier au tube d'enroulement. L'état de surface et/ou les faibles dimensions de cette surface annulaire permettent de minimiser les frottements en cours de fonctionnement.

L'invention s'applique également dans le cadre d'un élément mobile non enroulable sur le tube, par exemple un store de type plissé ou bouillonné de type inversé, dont les cordons s'enroulent sur un arbre entraîné par l'actionneur, par exemple sur un tube contenant le dispositif d'alimentation. Elle s'applique également dans le cadre d'un écran de type battant (volet ou portail), dont le dispositif d'alimentation serait logé dans un tube d'actionnement, par exemple un tube positionné au niveau des gonds.

## Revendications

1. Dispositif (1) motorisé de manœuvre destiné à la manœuvre d'un écran mobile à toile enroulable (3) autour d'un tube d'enroulement (2), le dispositif (1) motorisé de manœuvre comprenant :
- un actionneur (4), comprenant un carter tubulaire creux (41) contenant un motoréducteur,
- un flasque (7a),
**caractérisé en ce que** le flasque (7a) comprend un premier support (11) prenant la forme d'un arbre de support et s'étendant depuis le flasque (7a) suivant un premier axe longitudinal (X-X') sensiblement perpendiculairement au flasque (7a), le premier support (11) coopérant avec le carter tubulaire creux (41), le carter tubulaire creux (41) étant fermé par le premier support (11) du flasque (7a),
le premier support (11) et le carter tubulaire creux (41) étant liés en rotation autour du premier axe longitudinal (X-X') et,
**en ce que** le dispositif (1) comprend un deuxième élément de support (12) s'étendant depuis le flasque (7a) suivant un deuxième axe (Z-Z') distinct du, et parallèle au premier axe (X-X'), le deuxième élément de support (12) étant destiné à coopérer avec un élément de compensation de couple (9) agissant par interaction avec la toile (3) ou le deuxième élément de support (12) étant destiné à coopérer avec un bâti (8) suivant un deuxième axe (Ya-Ya', Yb-Yb') sensiblement perpendiculaire au premier axe longitudinal (X-X') du premier support (11), et
**en ce que** le dispositif comprend une couronne (21) à collerette (92) montée libre en rotation sur le carter tubulaire creux (41) et servant de palier pour le tube d'enroulement (2) lorsque l'actionneur (4) est inséré dans le tube d'enroulement (2).

2. Dispositif motorisé selon la revendication 1, **caractérisé en ce que** le premier support comprend au moins un premier élément (22 , 23) d'arrêt en rotation, notamment au moins une rainure (22, 23), respectivement au moins une nervure, en particulier au moins un premier élément d'arrêt en rotation formé sur l'arbre de support du premier support (11) et **en ce que** le carter tubulaire creux (41) comprend au moins un deuxième élément (42 , 43) d'arrêt en rotation, notamment au moins une nervure (42 , 43), respectivement au moins une rainure, en particulier au moins un deuxième élément d'arrêt en rotation formé sur des parois internes du carter tubulaire creux (41), les premier et deuxième éléments d'arrêt en rotation coopérant pour lier en rotation, notamment pour lier en rotation autour du premier axe longitudinal (X-X'), le premier support (11) et le carter tubulaire creux (41).

3. Dispositif motorisé selon la revendication 1 ou 2, **caractérisé en ce que** le flasque (7a) et ses premier (11) et deuxième (12) supports sont réalisés de manière monobloc.

4. Dispositif motorisé selon la revendication précédente, **caractérisé en ce que** le premier support (11) est au moins partiellement inséré dans le carter tubulaire creux (41) de l'actionneur (4).

5. Dispositif motorisé selon l'une des revendications précédentes, **caractérisé en ce que** le flasque (7a) comprend un premier alésage (25) destiné à recevoir une partie (45) connectique et/ou électronique de l'actionneur, le premier alésage (25) étant réalisé à l'intérieur du premier support (11).

6. Dispositif motorisé selon l'une des revendications précédentes, **caractérisé en ce que** le flasque (7a) comprend un deuxième alésage (71) sur sa face latérale externe et un opercule (72) destiné à fermer ce deuxième alésage (71).

7. Dispositif motorisé selon les revendications 5 et 6, **caractérisé en ce que** le premier (25) et le deuxième (71) alésage du flasque (7a) sont communicants.

8. Dispositif motorisé selon l'une des revendications 6 ou 7, **caractérisé en ce que** le flasque (7a) comprend un trou de passage entre le deuxième alésage (71) et sa face latérale interne, le trou débouchant à l'extérieur du diamètre du carter tubulaire creux (41) de l'actionneur (4) pour le passage d'un câble.

9. Dispositif motorisé selon l'une des revendications 6 à 8, **caractérisé en ce qu'**un premier chemin de guidage (77) d'un fil électrique est positionné dans le deuxième alésage (71).

10. Dispositif motorisé selon l'une des revendications précédentes, **caractérisé en ce que** la face latérale interne du flasque (7a) comprend un deuxième chemin de guidage (79) d'un fil électrique.

11. Dispositif motorisé selon l'une des revendications précédentes, **caractérisé en ce que** les deux supports (11, 12) s'étendent à partir de la face latérale interne du flasque (7a).

12. Dispositif motorisé selon l'une des revendications précédentes, **caractérisé en ce qu'**il comprend une surface annulaire sur la face latérale interne du flasque (7a) contre laquelle peut venir en appui une bague palier montée libre en rotation autour du carter tubulaire creux (41) de l'actionneur (4).

13. Système domotique motorisé **caractérisé en ce qu'**il comprend un dispositif motorisé (1) selon l'une des revendications précédentes, une bague palier libre en rotation sur le carter tubulaire creux (41) de l'actionneur (4), un tube d'enroulement (2), monté coulissant sur la bague palier, la bague palier venant en appui sur la face interne du flasque (7a) et un deuxième flasque (7b) comprenant un élément de support du tube d'enroulement.

## Patentansprüche

1. Motorisierte Betätigungsvorrichtung (1) für die Betätigung eines beweglichen Schirms (3) mit einem um ein Aufrollrohr (2) aufrollbaren Tuch, wobei die motorisierte Betätigungsvorrichtung (1) Folgendes umfasst:
- einen Aktuator (4), der ein rohrförmiges Hohlgehäuse (41) umfasst, das einen Getriebemotor enthält,
- einen Behälter (7a),
**dadurch gekennzeichnet, dass** der Flansch (7a) eine erste Stütze (11) in der Form einer Stützwelle umfasst, die sich von dem Flansch (7a) gemäß einer ersten Längsachse (X - X') im Wesentlichen senkrecht zu dem Flansch (7a) erstreckt, wobei die erste Stütze (11) mit dem rohrförmigen Hohlgehäuse (41) zusammenwirkt, wobei das rohrförmige Hohlgehäuse (41) durch die erste Stütze (11) des Flanschs (7a) verschlossen ist, wobei die erste Stütze (11) und das rohrförmige Hohlgehäuse (41) drehfest um die erste Längsachse (X - X') verbunden sind, und
dass die Vorrichtung (1) ein zweites Stützelement (12) umfasst, das sich von dem Flansch (7a) gemäß einer zweiten Achse (Z - Z') erstreckt, die von der ersten Achse (X - X') verschieden ist und zu dieser parallel verläuft, wobei das zweite Stützelement (12) für das Zusammenwirken mit einem Drehmomentausgleichselement (9) bestimmt ist, das durch Zusammenwirken mit dem Tuch (3) wirkt, oder das zweite Stützelement (12) für das Zusammenwirken mit einem Gestell (8) gemäß einer zweiten Achse (Ya - Ya', Yb - Yb') bestimmt ist, die im Wesentlichen senkrecht zu der ersten Längsachse (X - X') der ersten Stütze (11) verläuft, und
dass die Vorrichtung einen Kranz (21) mit einem Kragenring (92) umfasst, der drehbar an dem rohrförmigen Hohlgehäuse (41) montiert ist und als Lager für das Aufrollrohr (2) dient, wenn der Aktuator (4) in das Aufrollrohr (2) eingeführt wird.

2. Motorisierte Vorrichtung nach Anspruch 1, **dadurch gekennzeichnet, dass** die erste Stütze mindestens ein erstes Element (22, 23) zur Sicherung gegen Drehbewegung, insbesondere eine Nut (22, 23) beziehungsweise mindestens eine Rippe, insbesondere mindestens ein erstes Element zur Sicherung gegen Drehbewegung umfasst, das an der Stützwelle der ersten Stütze (11) ausgebildet ist, und dass das rohrförmige Hohlgehäuse (41) mindestens ein zweites Element (42, 43) zur Sicherung gegen Drehbewegung, insbesondere mindestens eine Rippe (42, 43) beziehungsweise mindestens eine Nut, insbesondere mindestens ein zweites Element zur Sicherung gegen Drehbewegung umfasst, das an Innenwänden des rohrförmigen Hohlgehäuses (41) ausgebildet ist, wobei das erste und das zweite Element zur Sicherung gegen Drehbewegung zusammenwirken, um die erste Stütze (11) und das rohrförmige Hohlgehäuse (41) drehfest zu verbinden, insbesondere um diese drehfest um die erste Längsachse (X - X') zu verbinden.

3. Motorisierte Vorrichtung nach Anspruch 1 oder 2, **dadurch gekennzeichnet, dass** der Flansch (7a) und seine erste (11) und zweite (12) Stütze einteilig ausgeführt sind.

4. Motorisierte Vorrichtung nach dem vorhergehenden Anspruch, **dadurch gekennzeichnet, dass** die erste Stütze (11) mindestens teilweise in das rohrförmige Hohlgehäuse (41) des Aktuators (4) eingeführt ist.

5. Motorisierte Vorrichtung nach einem der vorhergehenden Ansprüche, **dadurch gekennzeichnet, dass** der Flansch (7a) eine erste Bohrung (25) zur Aufnahme eines anschlusstechnischen und/oder elektronischen Teils (45) des Aktuators umfasst, wobei die erste Bohrung (25) im Inneren der ersten Stütze (11) ausgeführt ist.

6. Motorisierte Vorrichtung nach einem der vorhergehenden Ansprüche, **dadurch gekennzeichnet, dass** der Flansch (7a) an seiner seitlichen Außenfläche eine zweite Bohrung (71) und einen Verschluss (72) zum Verschließen dieser zweiten Bohrung (71) umfasst.

7. Motorisierte Vorrichtung nach den Ansprüchen 5 und 6, **dadurch gekennzeichnet, dass** die erste (25) und die zweite (71) Bohrung des Flanschs (7a) miteinander kommunizieren.

8. Motorisierte Vorrichtung nach einem der Ansprüche 6 oder 7, **dadurch gekennzeichnet, dass** der Flansch (7a) zwischen der zweiten Bohrung (71) und seiner seitlichen Innenfläche ein Durchgangsloch umfasst, wobei das Loch außerhalb des Durchmessers des rohrförmigen Hohlgehäuses (41) des Aktuators (4) zum Durchgang eines Kabels mündet.

9. Motorisierte Vorrichtung nach einem der Ansprüche 6 bis 8, **dadurch gekennzeichnet, dass** in der zweiten Bohrung (71) ein erster Weg (77) zum Führen eines Stromkabels positioniert ist.

10. Motorisierte Vorrichtung nach einem der vorhergehenden Ansprüche, **dadurch gekennzeichnet, dass** die seitliche Innenfläche des Flanschs (7a) einen zweiten Weg (79) zum Führen eines Stromkabels umfasst.

11. Motorisierte Vorrichtung nach einem der vorhergehenden Ansprüche, **dadurch gekennzeichnet, dass** sich die beiden Stützen (11, 12) von der seitlichen Innenfläche des Flanschs (7a) erstrecken.

12. Motorisierte Vorrichtung nach einem der vorhergehenden Ansprüche, **dadurch gekennzeichnet, dass** sie an der seitlichen Innenfläche des Flanschs (7a) eine ringförmige Fläche umfasst, an der ein Lagerring zur Anlage kommen kann, der drehbar um das rohrförmige Hohlgehäuse (41) des Aktuators (4) montiert ist.

13. Motorisiertes Gebäudeautomationssystem, **dadurch gekennzeichnet, dass** es eine motorisierte Vorrichtung (1) nach einem der vorhergehenden Ansprüche, einen drehbar um das rohrförmige Hohlgehäuse (41) des Aktuators (4) montierten Lagerring, ein Aufrollrohr (2), das an dem Lagerring gleitend montiert ist, wobei der Lagerring an der Innenfläche des Flanschs (7a) zur Anlage kommt, und einen zweiten Flansch (7b) umfasst, der ein Element zum Stützen des Aufrollrohrs umfasst.

## Claims

1. Motorized manoeuvring device (1) intended to manoeuvre a moving fabric screen (3), windable around a winding tube (2), the motorized manoeuvring device comprising:
- an actuator (4), comprising a tubular hollow housing (41) containing a gear motor,
- an end-plate (7a),
**characterized in that** the end-plate (7a) comprises a first support (11) taking the form of a support shaft extending from the end-plate (7a) along a first longitudinal axis (X-X') substantially perpendicularly to the end-plate (7a), the first support (11) cooperating with the tubular hollow housing (41), the tubular hollow housing (41) being closed by the first support (11) of the end-plate (7a), the first support (11) and the tubular hollow housing (41) being linked in rotation about the first longitudinal axis (X-X'), and
**in that** the device (1) comprises a second support element (12) extending from the end-plate (7a) along a second axis (Z-Z'), distinct from and parallel to the first axis (X-X'), the second support element (12) being intended to cooperate with a torque neutralizing element (9) acting by interaction with the fabric (3), or the second support element (12) being intended to cooperate with a frame (8) according to the second axis (Ya-Ya', Yb_Yb') substantially perpendicular to the first axis (X-X') of the first support (11),. and
**in that** the device (1) comprises a crown ring (21) with a collar (92) mounted to rotate freely on the tubular hollow housing (41) and serving as a bearing for the winding tube (2) when the actuator (4) is inserted into the winding tube (2).

2. Motorized device according to Claim 1, **characterized in that** the first support comprises at least one first rotation stopping element (22, 23), notably at least one groove (22, 23), respectively at least one rib, in particular at least one first rotation stopping element formed on the support shaft of the first support (11) and **in that** the tubular hollow housing (41) comprises at least one second rotation stopping element (42, 43), notably at least one rib (42, 43), respectively at least one groove, in particular at least one second rotation stopping element formed on the inner walls of the tubular hollow housing (41), the first and second rotation stopping elements cooperating to link in rotation, notably to link in rotation about the first longitudinal axis (X-X'), the first support (11) and the tubular hollow housing (41).

3. Motorized device according to Claim 1 or 2, **characterized in that** the end-plate (7a) and its first (11) and second (12) supports are produced in a single piece.

4. Motorized device according to the preceding claim, **characterized in that** the first support (11) is at least partially inserted into the tubular hollow housing (41) of the actuator (4).

5. Motorized device according to one of the preceding claims, **characterized in that** the end-plate (7a) comprises a first bore (25) intended to receive a connection and/or electronic part (45) of the actuator, the first bore (25) being produced inside the first support (11).

6. Motorized device according to one of the preceding claims, **characterized in that** the end-plate (7a) comprises a second bore (71) on its outer lateral face and a cover (72) intended to close this second bore (71).

7. Motorized device according to Claims 5 and 6, **characterized in that** the first (25) and the second (71) bores of the end-plate (7a) are connected to one another.

8. Motorized device according to one of Claims 6 or 7, **characterized in that** the end-plate (7a) comprises a through hole between the second bore (71) and its inner lateral face, the hole emerging outside the diameter of the tubular hollow housing (41) of the actuator (4) for the entry of a cable.

9. Motorized device according to one of Claims 6 to 8, **characterized in that** a first guiding path (77) for an electrical wire is positioned in the second bore (71).

10. Motorized device according to one of the preceding claims, **characterized in that** the inner lateral face of the end-plate (7a) comprises a second guiding path (79) for an electrical wire.

11. Motorized device according to one of the preceding claims, **characterized in that** the two supports (11, 12) extend from the inner lateral face of the end-plate (7a).

12. Motorized device according to one of the preceding claims, **characterized in that** it comprises an annular surface on the inner lateral face of the end-plate (7a) against which a bearing ring that is mounted to rotate freely about the tubular hollow housing (41) of the actuator (4) bears.

13. Motorized home automation system, **characterized in that** it comprises a motorized device (1) according to one of the preceding claims, a bearing ring rotating freely on the tubular hollow housing (41) of the actuator (4), a winding tube (2), mounted to slide on the bearing ring, the bearing ring bearing on the inner face of the end-plate (7a) and a second end-plate (7b) comprising a support element for the winding tube.
